# EUROPEAN PATENT SPECIFICATION

(11) **EP 4 552 897 B1**
(45) Date of publication and mention of the grant of the patent: **07.10.2026**
(21) Application number: 24212443.6
(22) Date of filing: 12.11.2024
(51) Int. Cl.: B60L 3/00, B60L 15/00, H02M 1/15, H02M 7/5387, H02P 5/74

(54) **METHOD TO CONTROL AN ELECTRIC POWER SYSTEM OF AN ELECTRIC VEHICLE**
VERFAHREN ZUR STEUERUNG EINES ELEKTRISCHEN ENERGIESYSTEMS EINES ELEKTROFAHRZEUGS
PROCÉDÉ DE COMMANDE D'UN SYSTÈME D'ALIMENTATION ÉLECTRIQUE D'UN VÉHICULE ÉLECTRIQUE

(30) Priority: 13.11.2023 IT 202300023958
(43) Date of publication of application: 14.05.2025
(73) Proprietor: FERRARI S.p.A., 41100 Modena (IT)
(72) Inventor: BETRO', Roberto, 41100 MODENA (IT); BISCEGLIE, Giorgio, 41100 MODENA (IT); DODET, Valerio, 41100 MODENA (IT); LO CALZO, Giovanni, 41100 MODENA (IT); BORRINO, Procolo Ivan, 41100 MODENA (IT); SITTA, Ugo, 41100 MODENA (IT)
(74) Representative: Studio Torta S.p.A.

(56) References cited:
- US-A1- 2004 160 201
- US-A1- 2012 235 617
- US-B2- 7 425 806

## Description

### CROSS-REFERENCE TO RELATED APPLICATIONS

This patent application claims priority from Italian patent application no. 102023000023958 filed on November 13, 2023.

### TECHNICAL FIELD

The present invention relates to a method to control an electric power system of an electric vehicle.

### PRIOR ART

An electric vehicle comprises at least one electric machine which is electrically connected to a battery and is mechanically connected to the drive wheels. In particular, the electric power system of an electric vehicle comprises at least one electronic bidirectional DC-AC power converter (namely, an inverter) which on the DC side is connected to the battery and on the AC side is connected to the electric machine and has the function of controlling the electric machine.

During the operation of the electronic power converter, on the DC side an evident ripple of the voltage is manifested at the switching frequency of the electronic power converter (directly dependent on the rotation speed of the electric machine); this ripple of the voltage on the DC side subjects the electrochemical cells of the battery to a significant stress and must thus be filtered by installing on the DC side a filter capacitor having a suitable (i.e. sufficiently high) capacity.

If the vehicle comprises more electric machines (for example two electric machines connected to the two front and rear axles, or four electric machines connected to the four wheels), just as many electronic bidirectional DC-AC power converters (inverters) are obviously provided, all connected to the same battery; in this situation, the ripples of the voltage on the DC side determined by all the electronic power converters can also be summed (at least for several instants) and thus it is necessary to dimension the filter capacitor in order to be able to compensate the sum of all the ripples of the voltage caused by all the electronic power converters.

Patent application US2012235617A1 describes a system for controlling rotary electric machines to reduce the current ripple on a DC bus.

Patent application US2004160201A1 describes a multiple inverter system with low power bus ripples.

Patent US7425806B2 describes a system for controlling a variable speed drive.

### DESCRIPTION OF THE INVENTION

The object of the present invention is to provide a method for controlling an electric power system of an electric vehicle, said control method allowing reducing the weight, the bulk and the cost of the filter capacitor and being simultaneously easy and cost-effective to implement.

According to the present invention, a method for controlling an electric power system of an electric vehicle is provided according to what is claimed in the appended claims.

The claims describe preferred embodiments of the present invention forming integral part of the present description.

### BRIEF DESCRIPTION OF THE DRAWINGS

The present invention will now be described with reference to the accompanying drawings, which illustrate a non-limiting example embodiment thereof, wherein:
- Figure 1 is a schematic plan view of an electric road vehicle;
- Figure 2 is a schematic view of an electric power system of the road vehicle of Figure 1;
- Figure 3 is a schematic view of a control mode performed by a control unit of the electric power system of Figure 2; and
- Figure 4 is a block diagram which illustrates a control logic implemented in the control unit of the electric power system of Figure 2.

### PREFERRED EMBODIMENTS OF THE INVENTION

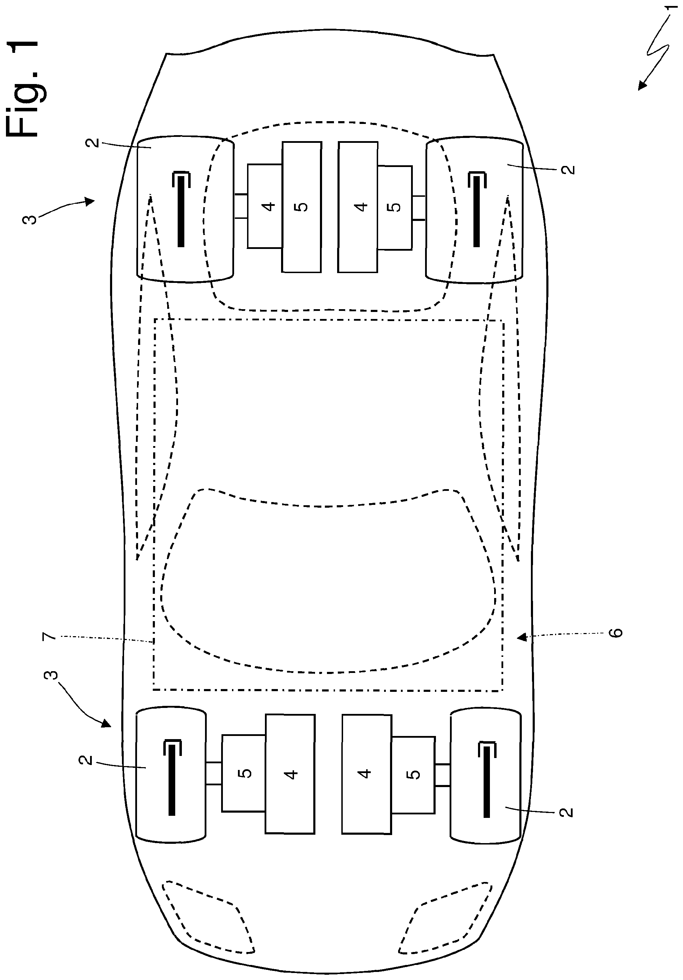

In Figure 1, reference numeral 1 indicates, as a whole, an electric vehicle provided with two drive wheels 2 (two front drive wheels 2 and two rear drive wheels 2).

The vehicle 1 comprises an electric propulsion system 3 which is arranged in a front position (namely, is connected to the two front drive wheels 2), and an electric propulsion system 3 which is arranged in a rear position (namely, is connected to the two rear drive wheels 2), is structurally totally identical to the electric propulsion system 3 arranged in the front position, and is mechanically totally independent of and separated from the electric propulsion system 3 arranged in the front position.

According to a different embodiment not illustrated, the vehicle 1 comprises one single electric propulsion system 3 (arranged in a front position or arranged in a rear position) and thus has only two drive wheels 2; in this embodiment, the vehicle 1 could alternatively also comprise a thermal propulsion system connected to the drive wheels 2 which do not receive the motion from the single electric propulsion system 3.

In the embodiment illustrated in Figure 1, each electric propulsion system 3 comprises a pair of reversible (i.e. that can operate both as electric motor absorbing electric energy and generating a mechanical torque, and as electric generator absorbing mechanical energy and generating electric energy) electric machines 4 provided with respective shafts and a pair of transmissions 5 which connect the electric machines 4 (namely, the shafts of the electric machines 4) to the corresponding drive wheels 2 without the interposition of any friction.

The vehicle 1 comprises a battery 6 provided with a container 7 and with a plurality of electrochemical cells which are arranged inside the container 7 and are adapted to convert the accumulated chemical energy into electric energy and vice versa.

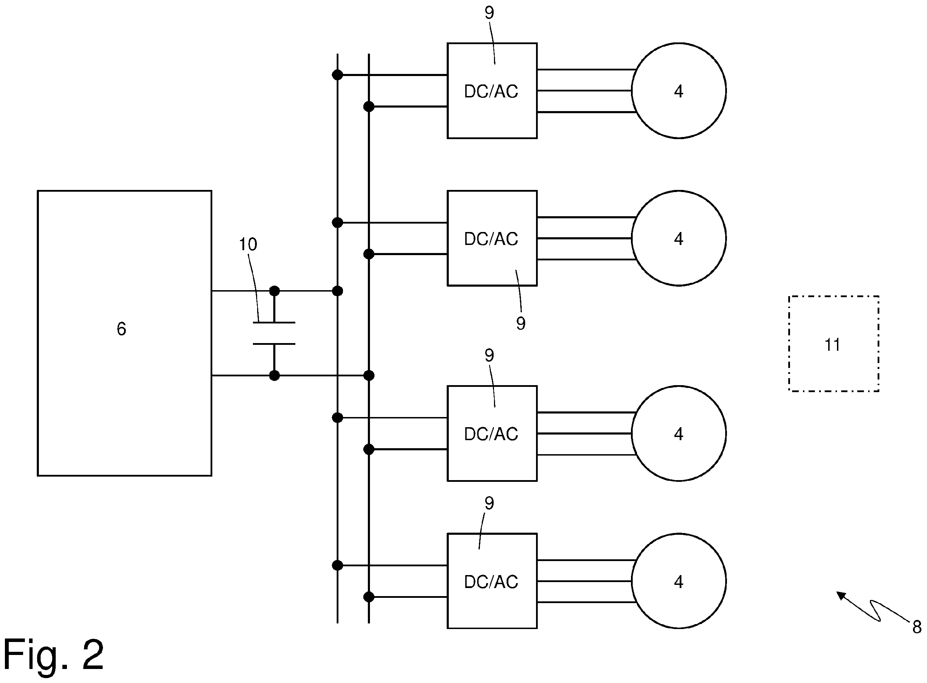

According to what is illustrated in Figure 2, the road vehicle 1 is provided with an electric power system 11, which comprises the battery 6 and four electronic DC-AC power converters (inverters) 9, each controlling a respective electric machine 4; namely, each electronic power converter 9 has a DC side which is connected to the battery 6 and comprises a three-phase AC side which is connected to the respective electric machine 4.

Between the electronic power converters 9 and the battery 6, a filter capacitor 10 is interposed which has the function of filtering the high-frequency voltage ripples determined by the operation of the electronic power converters 9.

A control unit 11 is provided which controls the operation of each electronic power converter 9 for following a rotation speed target (positive for the forward movement and negative for the backward movement) of the respective electric machine 8 and a torque target (positive in the case of operation as motor, negative in the case of operation as generator) delivered or absorbed by the electric machine 8.

In use, each electronic power converter 9 applies a three-phase alternated voltage to the terminals of the electric machine 8 (and thus delivers/absorbs a three-phase alternating current which flows through the terminals of the electric machine 8). In particular, the control unit 11 translates the *"mechanical"* targets (rotation speed and delivered/absorbed torque of the electric machine 8) into *"electric"* targets (among which an electric power which has to be provided to/absorbed by the electric machine 8).

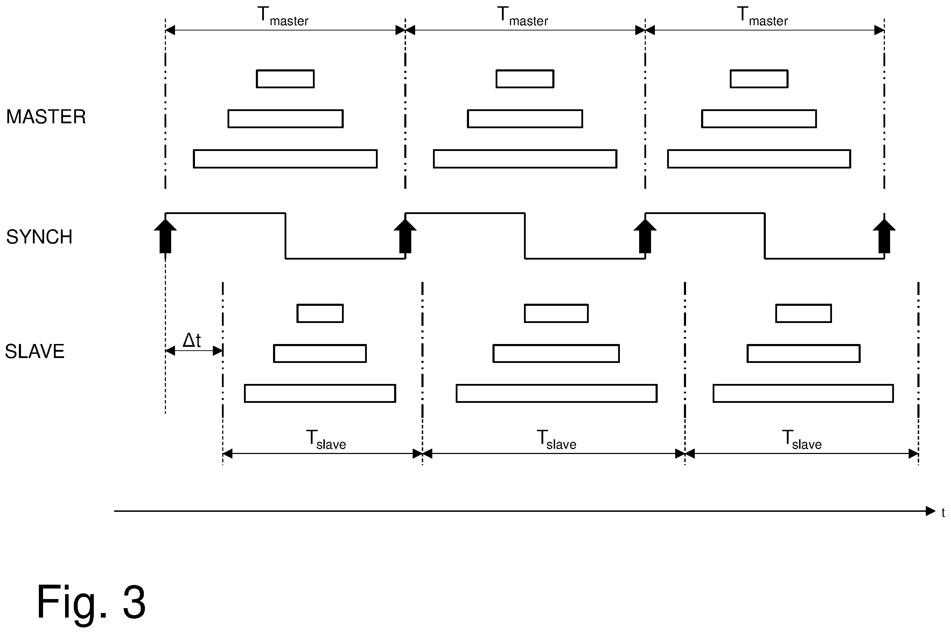

The control unit 11 identifies only one of the electronic power converters (inverters) 9 as master (namely, as guide) and identifies all the other electronic power converters (inverters) 9 as slave (namely, as followers of the master electronic power converter 9). Figure 3 illustrates a control logic implemented in the control unit 11 (for simplicity, the behaviour of only one slave electronic power converter 9 is shown) which shows based on time t the sequence of the activations of the three phases for each switching cycle. According to what is illustrated in Figure 3, the control unit 11 controls the master electronic power converter 9 with a master switching period Tₘₐₛₜₑᵣ and controls each slave electronic power converter 9 with a respective slave switching period Tₛₗₐᵥₑ (potentially different for each slave electronic power converter 9).

The control unit 11 determines the master switching period Tₘₐₛₜₑᵣ solely based on a rotation speed of the corresponding electric machine 4; namely, the master switching period Tₘₐₛₜₑᵣ is established only based on the control needs of the corresponding electric machine 4 so as to perform the best control possible of the corresponding electric machine 4.

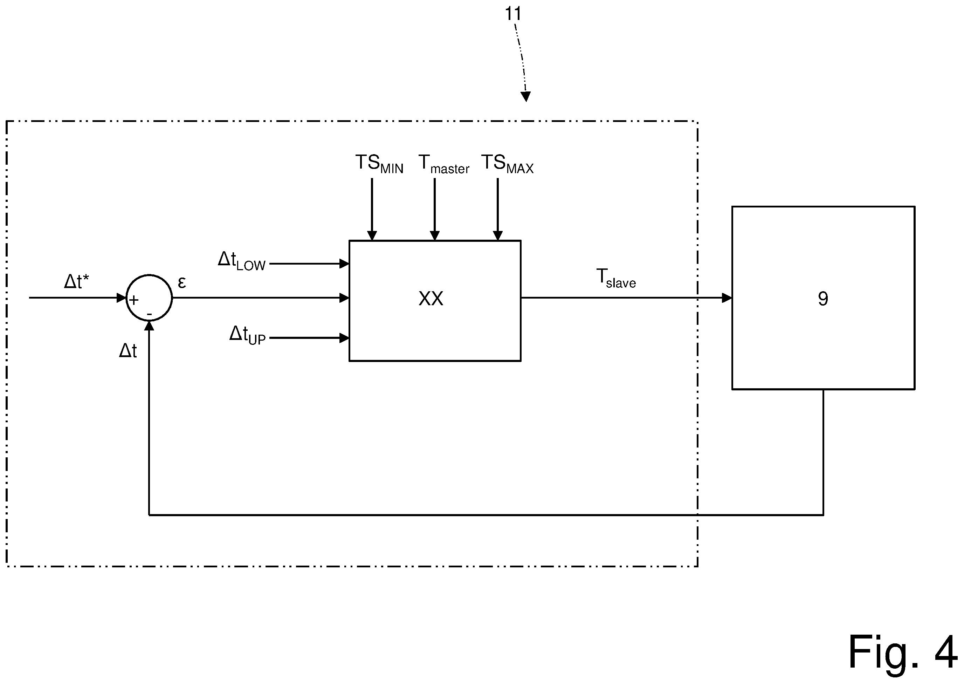

In use and according to what is illustrated in Figure 4, the control unit 11 establishes a desired time difference Δt* between a switching of the master electronic power converter 9 and a switching of each slave electronic power converter 9; in particular, the desired time difference Δt* is potentially different for each slave electronic power converter 9, namely the three desired time differences Δt* are not (always) the same with respect to one another. In particular, the desired time difference Δt* is determined based on the master switching period Tₘₐₛₜₑᵣ (namely, the desired time difference Δt* varies upon the varying of the master switching period Tₘₐₛₜₑᵣ).

In the embodiment where only two electronic power converters 9 are present (one master electronic power converter 9 and one slave electronic power converter 9), the sole desired time difference Δt* is approximately one quarter of the master switching period Tₘₐₛₜₑᵣ. In the embodiment where four electronic power converters 9 are present (one master electronic power converter 9 and three slave electronic power converters 9), the three desired time differences Δt* are different from one another and could, for example be equal, to one quarter, half and three quarters of the master switching period Tₘₐₛₜₑᵣ.

In use and according to what is illustrated in Figure 4, the control unit 11 determines an actual time difference Δt between the switching of the master electronic power converter 9 and the switching of each slave electronic power converter 9 (obviously the actual time difference Δt is potentially different for each slave electronic power converter 9) and thus compares each desired time difference Δt* with the respective actual time difference Δt. Furthermore, the control unit 11 changes, if necessary, the sole slave switching period Tₛₗₐᵥₑ based on the comparison between the respective desired time difference Δt* with the respective actual time difference Δt; namely, the master switching period Tₘₐₛₜₑᵣ is always constant and solely established based on the rotation speed of the respective electric machine 4 and a (possible) difference between a desired time difference Δt* and the respective actual time difference Δt determines (if necessary) only a variation of the corresponding slave switching period Tₛₗₐᵥₑ.

If a desired time difference Δt* is the same as the respective actual time difference Δt, the corresponding slave switching period Tₛₗₐᵥₑ is set to be identical to the master switching period Tₘₐₛₜₑᵣ (namely, it is not necessary to insert a further switching between the master electronic power converter 9 and the corresponding slave electronic power converter 9).

If a desired time difference Δt* is (substantially) different from the respective actual time difference Δt, the corresponding slave switching period Tₛₗₐᵥₑ is set to be different from the master switching period Tₘₐₛₜₑᵣ (namely, it is necessary to insert a further switching between the master electronic power converter 9 and the corresponding slave electronic power converter 9 for eliminating the difference between the desired time difference Δt* and the respective actual time difference Δt).

According to a preferred embodiment, if a desired time difference Δt* is (substantially) greater than the respective actual time difference Δt, the corresponding slave switching period Tₛₗₐᵥₑ is set to be greater than the master switching period Tₘₐₛₜₑᵣ and, if a desired time difference Δt* is (substantially) smaller than the respective actual time difference Δt, the corresponding slave switching period Tₛₗₐᵥₑ is set to be smaller than the master switching period Tₘₐₛₜₑᵣ.

According to a preferred embodiment, a difference ε is calculated between a desired time difference Δt* and the respective actual time difference Δt (ε = Δt* - Δt): if the difference ε between the desired time difference Δt* and the respective actual time difference Δt is smaller than a lower threshold Δt_{UP} (having a negative value, i.e. lower than zero), the respective slave switching period Tₛₗₐᵥₑ is set to be smaller than the master switching period Tₘₐₛₜₑᵣ and preferably equal to a minimum value TS_{MIN} (obviously smaller than the master switching period Tₘₐₛₜₑᵣ), if the difference ε between the desired time difference Δt* and the respective actual time difference Δt is greater than an upper threshold Δt_{LOW} (having a positive value), the respective slave switching period Tₛₗₐᵥₑ is set to be greater than the master switching period Tₘₐₛₜₑᵣ and preferably equal to a maximum value TS_{MAX} (obviously greater than the master switching period Tₘₐₛₜₑᵣ), and if the difference ε between the desired time difference Δt* and the respective actual time difference Δt is comprised between the lower threshold Δt_{UP} (having a negative value) and the upper threshold Δt_{LOW} (having a positive value), the respective slave switching period Tₛₗₐᵥₑ is set to be the same as the master switching period Tₘₐₛₜₑᵣ.

According to a preferred embodiment, the control unit 11 determines the lower threshold Δt_{UP} (having a negative value) and the upper threshold Δt_{LOW} (having a positive value) based on the master switching period Tₘₐₛₜₑᵣ; namely, upon the varying of the master switching period Tₘₐₛₜₑᵣ, also the lower threshold Δt_{UP} and the upper threshold Δt_{LOW} are varied. Similarly, according to a preferred embodiment, the control unit 11 determines the minimum value TS_{MIN} and the maximum value TS_{MAX} based on the master switching period Tₘₐₛₜₑᵣ; namely, upon the varying of the master switching period Tₘₐₛₜₑᵣ, also the minimum value TS_{MIN} and the maximum value TS_{MAX} are varied.

Preferably, the control unit 11 determines the minimum value TS_{MIN} and the maximum value TS_{MAX} assuming that a switching frequency difference ΔF is (by adding or subtracting) applied to the master switching period Tₘₐₛₜₑᵣ; the switching frequency difference ΔF has to be sufficiently high for quite quickly allowing correcting the corresponding difference ε between the desired time difference Δt* and the respective actual time difference Δt, but it must not be too large for avoiding an excessive difference between the master switching period Tₘₐₛₜₑᵣ and a slave switching period Tₛₗₐᵥₑ (namely, for avoiding penalizing the quality of the control of the respective slave electronic power converter 9). The switching frequency difference ΔF which is added to/subtracted from the master switching period Tₘₐₛₜₑᵣ for determining the minimum value TS_{MIN} and the maximum value TS_{MAX} can be constant and predetermined or can also be variable (for example, based on the master switching period Tₘₐₛₜₑᵣ, namely the switching frequency difference ΔF increases upon the decrease in the master switching period Tₘₐₛₜₑᵣ).

Namely, the minimum value TS_{MIN} and the maximum value TS_{MAX} are calculated using the following equations: ${TS}_{MIN} = 1 / \left(1/{T}_{master}+ΔF\right)$ ${TS}_{MAX} = 1 / \left(1/{T}_{master}-ΔF\right)$

By way of example, generally the minimum value TS_{MIN} and the maximum value TS_{MAX} differ from the master switching period Tₘₐₛₜₑᵣ by 0.1-10%.

The minimum value TS_{MIN} is clearly lower than the maximum value TS_{MAX} and thus when a slave switching period Tₛₗₐᵥₑ is set to be equal to the minimum value TS_{MIN}, the respective slave electronic power converter 9 accelerates with respect to (goes faster than) the master electronic power converter 9, whereas when a slave switching period Tₛₗₐᵥₑ is set to be equal the maximum value TS_{MAX}, the respective slave electronic power converter 9 slows down with respect to (goes slower than) the master electronic power converter 9.

Summarizing, if the difference ε between the desired time difference Δt* and the respective actual time difference Δt is smaller than the lower threshold Δt_{UP} (having a negative value), it means that the actual time difference Δt is higher than the desired time difference Δt* (ε = Δt* - Δt) and thus it is necessary to accelerate the respective slave electronic power converter 9 setting the respective slave switching period Tₛₗₐᵥₑ to be smaller than the master switching period Tₘₐₛₜₑᵣ and equal to the minimum value TS_{MIN}; whereas, if the difference ε between the desired time difference Δt* and the respective actual time difference Δt is greater than the upper threshold Δt_{LOW} (having a positive value), it means that the actual time difference Δt is lower than the desired time difference Δt* (ε = Δt* - Δt) and it is thus necessary to slow down the respective slave electronic power converter 9 setting the respective slave switching period Tₛₗₐᵥₑ to be greater than the master switching period Tₘₐₛₜₑᵣ and equal to the maximum value TS_{MAX}. Finally, if the difference ε between the desired time difference Δt* and the respective actual time difference Δt is comprised between the lower threshold Δt_{UP} (having a negative value) and the upper threshold Δt_{LOW} (having a positive value), it means that the actual time difference Δt is quite (sufficiently) similar to the desired time difference Δt* (ε = Δt* - Δt) and thus the respective slave electronic power converter 9 can have the same speed of the respective master electronic power converter 9 setting the respective slave switching period Tₛₗₐᵥₑ to be identical to the master switching period Tₘₐₛₜₑᵣ.

According to a preferred embodiment, the control unit 11 generates a synchronization signal SYNCH (illustrated in Figure 3) exactly synchronized with the switching of the master electronic power converter 9; namely, the synchronization signal SYNCH indicates the operation of the master electronic power converter 9. Therefore, the control unit 11 determines the actual time difference Δt of each slave electronic power converter 9 using the synchronization signal SYNCH as reference.

According to a preferred embodiment, the control unit 11 carries out the comparison between each desired time difference Δt* and the respective actual time difference Δt and the consequent change, if needed, of the respective slave switching period Tₛₗₐᵥₑ with every switching cycle of the electronic power converters 9. Namely, potentially with every switching cycle of the electronic power converters 9, each slave switching period Tₛₗₐᵥₑ could be adapted for eliminating a possible difference between the respective desired time difference Δt* and the respective actual time difference Δt.

According to a preferred embodiment, the control unit 11 temporarily interrupts the change of the slave switching periods Tₛₗₐᵥₑ based on the comparison between the desired time differences Δt* and the respective actual time differences Δt, when an absolute value of a difference between the rotation speeds of the electric machines 4 exceeds a synchronization threshold. In other words, in order to carry out a good control of an electric machine 4, it is necessary for the switching period to be suitable to the rotation speed of the electric machine 4: when all the electric machines 4 approximately have the same speed (namely, when the vehicle 1 is travelling along a straight road), it is possible to set each slave switching period Tₛₗₐᵥₑ to be the same as the master switching period Tₘₐₛₜₑᵣ or anyway not much different from the master switching period Tₘₐₛₜₑᵣ and instead, when the electric machines 4 have different speeds (namely, when the vehicle 1 is travelling along a curve and thus the wheels 2 outside the curve have to rotate faster than the wheels 2 inside the curve) it can be more convenient not to link the slave switching periods Tₛₗₐᵥₑ to the master switching period Tₘₐₛₜₑᵣ so as to be free to choose the slave switching periods Tₛₗₐᵥₑ more suitable to the actual rotation speeds of the respective electric machines 4. It is important to observe that during the travelling of a curve, the electric machines 4 are hardly called to generate or absorb high torques and mechanical powers (namely, close to the maximum values) and thus the fact of compensating in a less effective manner the voltage ripple on the DC side is less penalizing (stressful) for the battery 6.

In the embodiment illustrated in the accompanying figures, four electronic power converters (inverters) 9 are present and thus one master electronic power converter 9 and three slave electronic power converters 9; according to other embodiments not illustrated, a different number of electronic power converters (inverters) 9 is provided, for example two or three electronic power converters (inverters) 9 and thus one master electronic power converter 9 and one or two slave electronic power converters 9.

The embodiments described herein can be combined with one another without departing from the scope of protection of the present invention as defined by the claims.

The above-described control method has numerous advantages.

Firstly, the above-described control method allows minimizing the ripple of the voltage on the DC side since the voltage ripples generated by the various electronic power converters (inverters) 9 tend to compensate (reduce) one another rather than summing up. In other words, the above-described control method allows obtaining a destructive interference, rather than a constructive interference, between the voltage ripples generated by the various electronic power converters (inverters) 9 and thus allows reducing in a substantial manner the ripple of the voltage on the DC side.

Therefore, thanks to the above-described control method, it is possible to reduce the capacity of the filter capacitor 10: some simulations have demonstrated that, thanks to the above-described control method, the capacity of the filter capacitor 10 can be reduced by 40-50%. In this manner, the filter capacitor 10 is smaller (less bulky), lighter and less expensive.

Furthermore, the above-described control method is easy and cost-effective to implement, since it does not require a high calculation power, does not require a relevant memory occupation, and especially does not require the installation of any additional physical component (hardware) with respect to what normally provided (and thus the above-described control method can also be installed in an existing road vehicle 1 with a simple software updating).

### LIST OF THE REFERENCE NUMERALS OF THE FIGURES

- 1: vehicle
- 2: wheels
- 3: propulsion system
- 4: electric machine
- 5: transmission
- 6: battery
- 7: container
- 8: electric power system
- 9: electronic power converter
- 10: filter capacitor
- 11: control unit
- t: time
- Tₘₐₛₜₑᵣ: master switching period
- Tₛₗₐᵥₑ: slave switching period
- Δt*: desired time difference
- Δt: actual time difference
- Δt_{UP}: lower threshold
- Δt_{LOW}: upper threshold
- ε: difference
- TS_{MIN}: minimum value
- TS_{MAX}: maximum value
- SYNCH: synchronization signal

## Claims

1. A method to control an electric power system (18) of an electric vehicle (1) and provided with at least two electric machines (4); the electric power system (18) comprises two electronic DC-AC power converters (9), each having a DC side connected to a battery (6) and an AC side connected to a respective electric machine (4); the control method comprises the steps of:
controlling a first electronic power converter (9) with a master switching period (Tₘₐₛₜₑᵣ);
controlling a second electronic power converter (9) with a slave switching period (Tₛₗₐᵥₑ); and
establishing a desired time difference (Δt*) between a switching of the first electronic power converter (9) and a switching of the second electronic power converter (9);
the control method is **characterized in that** it comprises the steps of:
determining an actual time difference (Δt) between the switching of the first electronic power converter (9) and the switching of the second electronic power converter (9);
comparing the desired time difference (Δt*) with the actual time difference (Δt); and
changing, if necessary, the sole slave switching period (Tₛₗₐᵥₑ) based on the comparison between the desired time difference (Δt*) with the actual time difference (Δt).

2. The control method according to claim 1, wherein, if the desired time difference (Δt*) is the same as the actual time difference (Δt), the slave switching period (Tₛₗₐᵥₑ) is set to be identical to the master switching period (Tₘₐₛₜₑᵣ).

3. The control method according to claim 1 or 2, wherein, if the desired time difference (Δt*) is different from the actual time difference (Δt), the slave switching period (Tₛₗₐᵥₑ) is set to be different from the master switching period (Tₘₐₛₜₑᵣ).

4. The control method according to claim 3, wherein, if the desired time difference (Δt*) is greater than the actual time difference (Δt), the slave switching period (Tₛₗₐᵥₑ) is set to be greater than the master switching period (Tₘₐₛₜₑᵣ) and, if the desired time difference (Δt*) is smaller than the actual time difference (Δt), the slave switching period (Tₛₗₐᵥₑ) is set to be smaller than the master switching period (Tₘₐₛₜₑᵣ) .

5. The control method according to one of the claims from 1 to 4, wherein:
if a difference (ε) between the desired time difference (Δt*) and the actual time difference (Δt) is smaller than a lower threshold (Δt_{UP}), the slave switching period (Tₛₗₐᵥₑ) is set to be smaller than the master switching period (Tₘₐₛₜₑᵣ);
if the difference (ε) between the desired time difference (Δt*) and the actual time difference (Δt) is greater than an upper threshold (Δt_{LOW}), the slave switching period (Tₛₗₐᵥₑ) is set to be greater than the master switching period (Tₘₐₛₜₑᵣ); and
if the difference (ε) between the desired time difference (Δt*) and the actual time difference (Δt) is comprised between the lower threshold (Δt_{UP}) and the upper threshold (Δt_{LOW}), the slave switching period (Tₛₗₐᵥₑ) is set to be the same as the master switching period (Tₘₐₛₜₑᵣ).

6. The control method according to claim 5, wherein the lower threshold (Δt_{UP}) is negative and the upper threshold (Δt_{LOW}) is positive.

7. The control method according to claim 5 or 6 and comprising the further step of determining the lower threshold (Δt_{UP}) and the upper threshold (Δt_{LOW}) based on the master switching period (Tₘₐₛₜₑᵣ).

8. The control method according to claim 5, 6 or 7, wherein:
if a difference (ε) between the desired time difference (Δt*) and the actual time difference (Δt) is smaller than the lower threshold (Δt_{UP}), the slave switching period (Tₛₗₐᵥₑ) is set to be equal to a minimum value (TS_{MIN}) smaller than the master switching period (Tₘₐₛₜₑᵣ); and
if the difference (ε) between the desired time difference (Δt*) and the actual time difference (Δt) is greater than the upper threshold (Δt_{LOW}), the slave switching period (Tₛₗₐᵥₑ) is set to be equal to a maximum value (TS_{MAX}) greater than the master switching period (Tₘₐₛₜₑᵣ).

9. The control method according to claim 8 and comprising the further step of determining the minimum value (TS_{MIN}) and the maximum value (TS_{MAX}) based on the master switching period (Tₘₐₛₜₑᵣ).

10. The control method according to claim 9, wherein the minimum value (TS_{MIN}) and the maximum value (TS_{MAX}) are determined assuming that a switching frequency difference (ΔF) is applied to the master switching period (Tₘₐₛₜₑᵣ).

11. The control method according to claim 10, wherein the minimum value (TS_{MIN}) and the maximum value (TS_{MAX}) are calculated using the following equations: ${TS}_{MIN} = 1 / \left(1/{T}_{master}+ΔF\right)$ ${TS}_{MAX} = 1 / \left(1/{T}_{master}-ΔF\right)$
TS_{MIN} minimum value;
TS_{MAX} maximum value;
Tₘₐₛₜₑᵣ master switching period;
ΔF switching frequency difference.

12. The control method according to one of the claims from 1 to 10 and comprising the steps of:
generating a synchronization signal (SYNCH) exactly corresponding to the switching period of the first electronic power converter (9); and
determining the actual time difference (Δt) using the synchronization signal (SYNCH) as reference.

13. The control method according to one of the claims from 1 to 12 and comprising the further step of determining the desired time difference (Δt*) based on the master switching period (Tₘₐₛₜₑᵣ).

14. The control method according to claim 13, wherein the desired time difference (Δt*) approximately is one quarter of the master switching period (Tₘₐₛₜₑᵣ).

15. The control method according to one of the claims from 1 to 14, wherein the master switching period (Tₘₐₛₜₑᵣ) is solely determined based on a rotation speed of the corresponding electric machine (4).

16. The control method according to one of the claims from 1 to 15, wherein the comparison between the desired time difference (Δt*) and the actual time difference (Δt) and the consequent change, if needed, of the slave switching period (Tₛₗₐᵥₑ) are carried out with every switching cycle of the electronic power converters (9).

17. The control method according to one of the claims from 1 to 16 and comprising the further step of temporarily interrupting the change of the slave switching period (Tₛₗₐᵥₑ) based on the comparison between the desired time difference (Δt*) and the actual time difference (Δt), when an absolute value of a difference between the rotation speeds of the two electric machines (4) exceeds a synchronization threshold.

## Patentansprüche

1. Verfahren zur Steuerung eines elektrischen Antriebssystems (18) eines Elektrofahrzeugs (1), das mit mindestens zwei Elektromotoren (4) ausgestattet ist; das elektrische Antriebssystem (18) umfasst zwei elektronische Gleichstrom-Wechselstrom-Leistungswandler (9), von denen jeder eine an eine Batterie (6) angeschlossene Gleichstromseite und eine an einen jeweiligen Elektromotor (4) angeschlossene Wechselstromseite aufweist; das Verfahren zur Steuerung umfasst die folgenden Schritte:
Steuern eines ersten elektronischen Leistungswandlers (9) mit einer Master-Umschaltperiode (Tₘₐₛₜₑᵣ);
Steuern eines zweiten elektronischen Leistungswandlers (9) mit einer Slave-Umschaltperiode (Tₛₗₐᵥₑ); und
Festlegen einer gewünschten Zeitdifferenz (Δt*) zwischen einem Umschaltvorgang des ersten elektronischen Leistungswandlers (9) und einem Umschaltvorgang des zweiten elektronischen Leistungswandlers (9);
das Verfahren zur Steuerung ist **dadurch gekennzeichnet, dass** es die folgenden Schritte umfasst:
Ermitteln einer tatsächlichen Zeitdifferenz (Δt) zwischen dem Umschalten des ersten elektronischen Leistungswandlers (9) und dem Umschalten des zweiten elektronischen Leistungswandlers (9);
Vergleichen der gewünschten Zeitdifferenz (Δt*) mit der tatsächlichen Zeitdifferenz (Δt); und
Ändern, sofern erforderlich, allein der Slave-Umschaltperiode (Tₛₗₐᵥₑ) auf der Grundlage des Vergleichs zwischen der gewünschten Zeitdifferenz (Δt*) und der tatsächlichen Zeitdifferenz (Δt).

2. Verfahren zur Steuerung nach Anspruch 1, wobei, wenn die gewünschte Zeitdifferenz (Δt*) mit der tatsächlichen Zeitdifferenz (Δt) übereinstimmt, die Slave-Umschaltperiode (Tₛₗₐᵥₑ) so eingestellt wird, dass sie mit der Master-Umschaltperiode (Tₘₐₛₜₑᵣ) identisch ist.

3. Verfahren zur Steuerung nach Anspruch 1 oder 2, wobei, wenn die gewünschte Zeitdifferenz (Δt*) von der tatsächlichen Zeitdifferenz (Δt) abweicht, die Slave-Umschaltperiode (Tₛₗₐᵥₑ) so eingestellt wird, dass sie sich von der Master-Umschaltperiode (Tₘₐₛₜₑᵣ) unterscheidet.

4. Verfahren zur Steuerung nach Anspruch 3, wobei, wenn die gewünschte Zeitdifferenz (Δt*) größer ist als die tatsächliche Zeitdifferenz (Δt), die Slave-Umschaltperiode (Tₛₗₐᵥₑ) so eingestellt wird, dass sie größer ist als die Master-Umschaltperiode (Tₘₐₛₜₑᵣ), und, wenn die gewünschte Zeitdifferenz (Δt*) kleiner ist als die tatsächliche Zeitdifferenz (Δt), die Slave-Umschaltperiode (Tₛₗₐᵥₑ) so eingestellt wird, dass sie kleiner ist als die Master-Umschaltperiode (Tₘₐₛₜₑᵣ).

5. Verfahren zur Steuerung nach einem der Ansprüche 1 bis 4, wobei:
wenn eine Differenz (ε) zwischen der gewünschten Zeitdifferenz (Δt*) und der tatsächlichen Zeitdifferenz (Δt) kleiner als ein unterer Schwellenwert (Δt_{UP}) ist, die Slave-Umschaltperiode (Tₛₗₐᵥₑ) so eingestellt wird, dass sie kleiner ist als die Master-Umschaltperiode (Tₘₐₛₜₑᵣ);
wenn die Differenz (ε) zwischen der gewünschten Zeitdifferenz (Δt*) und der tatsächlichen Zeitdifferenz (Δt) größer ist als ein oberer Schwellenwert (Δt_{LOW}), die Slave-Umschaltperiode (Tₛₗₐᵥₑ) so eingestellt wird, dass sie größer ist als die Master-Umschaltperiode (Tₘₐₛₜₑᵣ); und
wenn die Differenz (ε) zwischen der gewünschten Zeitdifferenz (Δt*) und der tatsächlichen Zeitdifferenz (Δt) zwischen dem unteren Schwellenwert (Δt_{UP}) und dem oberen Schwellenwert (Δt_{LOW}) liegt, die Slave-Umschaltperiode (Tₛₗₐᵥₑ) so eingestellt wird, dass sie der Master-Umschaltperiode (Tₘₐₛₜₑᵣ) entspricht.

6. Verfahren zur Steuerung nach Anspruch 5, wobei der untere Schwellenwert (Δt_{UP}) negativ und der obere Schwellenwert (Δt_{LOW}) positiv ist.

7. Verfahren zur Steuerung gemäß Anspruch 5 oder 6, umfassend den weiteren Schritt des Bestimmens des unteren Schwellenwerts (Δt_{UP}) und des oberen Schwellenwerts (Δt_{LOW}) auf der Grundlage der Master-Umschaltperiode (Tₘₐₛₜₑᵣ).

8. Verfahren zur Steuerung nach Anspruch 5, 6 oder 7, wobei:
wenn eine Differenz (ε) zwischen der gewünschten Zeitdifferenz (Δt*) und der tatsächlichen Zeitdifferenz (Δt) kleiner ist als der untere Schwellenwert (Δt_{UP}), die Slave-Umschaltperiode (Tₛₗₐᵥₑ) auf einen Mindestwert (TS_{MIN}) gesetzt wird, der kleiner ist als die Master-Umschaltperiode (Tₘₐₛₜₑᵣ); und
wenn die Differenz (ε) zwischen der gewünschten Zeitdifferenz (Δt*) und der tatsächlichen Zeitdifferenz (Δt) größer ist als der obere Schwellenwert (Δt_{LOW}), die Slave-Umschaltperiode (Tₛₗₐᵥₑ) auf einen Maximalwert (TS_{MAX}) gesetzt wird, der größer ist als die Master-Umschaltperiode (Tₘₐₛₜₑᵣ).

9. Verfahren zur Steuerung nach Anspruch 8, umfassend den weiteren Schritt des Bestimmens des Minimalwerts (TS_{MIN}) und des Maximalwerts (TS_{MAX}) auf der Grundlage der Master-Umschaltperiode (Tₘₐₛₜₑᵣ).

10. Verfahren zur Steuerung nach Anspruch 9, wobei der Minimalwert (TS_{MIN}) und der Maximalwert (TS_{MAX}) unter der Annahme bestimmt werden, dass eine Umschaltfrequenzdifferenz (ΔF) auf die Master-Umschaltperiode (Tₘₐₛₜₑᵣ) angewendet wird.

11. Verfahren zur Steuerung nach Anspruch 10, wobei der Minimalwert (TS_{MIN}) und der Maximalwert (TS_{MAX}) anhand der folgenden Gleichungen berechnet werden: ${TS}_{MIN} = 1 / \left(1/{T}_{master}+ΔF\right)$ ${TS}_{MAX} = 1 / \left(1/{T}_{master}-ΔF\right)$
TS_{MIN} Mindestwert;
TS_{MAX} Maximalwert;
Tₘₐₛₜₑᵣ Master-Umschaltperiode;
ΔF Umschaltfrequenzdifferenz.

12. Verfahren zur Steuerung nach einem der Ansprüche 1 bis 10, umfassend die Schritte:
Erzeugen eines Synchronisationssignals (SYNCH), das genau der Umschaltperiode des ersten elektronischen Leistungswandlers (9) entspricht; und
Bestimmen der tatsächlichen Zeitdifferenz (Δt) unter Verwendung des Synchronisationssignals (SYNCH) als Referenz.

13. Verfahren zur Steuerung nach einem der Ansprüche 1 bis 12, umfassend den weiteren Schritt des Bestimmens der gewünschten Zeitdifferenz (Δt*) auf der Grundlage der Master-Umschaltperiode (Tₘₐₛₜₑᵣ).

14. Verfahren zur Steuerung nach Anspruch 13, wobei die gewünschte Zeitdifferenz (Δt*) ungefähr ein Viertel der Master-Umschaltperiode (_{Tmaster}) beträgt.

15. Verfahren zur Steuerung nach einem der Ansprüche 1 bis 14, wobei die Master-Umschaltperiode (Tₘₐₛₜₑᵣ) allein auf der Grundlage einer Drehzahl des entsprechenden Elektromotors (4) bestimmt wird.

16. Verfahren zur Steuerung nach einem der Ansprüche 1 bis 15, wobei der Vergleich zwischen der gewünschten Zeitdifferenz (Δt*) und der tatsächlichen Zeitdifferenz (Δt) sowie die daraus resultierende, gegebenenfalls erforderliche Änderung der Slave-Umschaltperiode (Tₛₗₐᵥₑ) bei jedem Umschaltzyklus der elektronischen Leistungswandler (9) durchgeführt werden.

17. Verfahren zur Steuerung nach einem der Ansprüche 1 bis 16, umfassend den weiteren Schritt des vorübergehenden Unterbrechens der Slave-Umschaltperiode (Tₛₗₐᵥₑ) auf der Grundlage des Vergleichs zwischen der gewünschten Zeitdifferenz (Δt*) und der tatsächlichen Zeitdifferenz (Δt), wenn ein Absolutwert einer Differenz zwischen den Drehzahlen der beiden Elektromotoren (4) einen Synchronisationsschwellenwert überschreitet.

## Revendications

1. Procédé de commande d'un système d'alimentation électrique (18) d'un véhicule électrique (1) et pourvu d'au moins deux machines électriques (4) ; le système d'alimentation électrique (18) comprend deux convertisseurs de puissance CC-CA électroniques (9), chacun ayant un côté CC connecté à une batterie (6) et un côté CA connecté à une machine électrique (4) respective ; le procédé de commande comprend les étapes suivantes :
la commande d'un premier convertisseur de puissance électronique (9) avec une période de commutation maître (Tₘₐₛₜₑᵣ) ;
la commande d'un second convertisseur de puissance électronique (9) avec une période de commutation esclave (Tₛₗₐᵥₑ) ; et
l'établissement d'une différence de temps souhaitée (Δt*) entre une commutation du premier convertisseur de puissance électronique (9) et une commutation du second convertisseur de puissance électronique (9) ;
la procédé de commande est **caractérisé en ce qu'**il comprend les étapes consistant à :
déterminer une différence de temps réelle (Δt) entre la commutation du premier convertisseur de puissance électronique (9) et la commutation du second convertisseur de puissance électronique (9) ;
comparer la différence de temps souhaitée (Δt*) à la différence de temps réelle (Δt) ; et
modifier, si nécessaire, la période de commutation esclave unique (Tₛₗₐᵥₑ) sur la base de la comparaison entre la différence de temps souhaitée (Δt*) et la différence de temps réelle (Δt).

2. Procédé de commande selon la revendication 1, dans lequel, si la différence de temps souhaitée (Δt*) est identique à la différence de temps réelle (Δt), la période de commutation esclave (Tₛₗₐᵥₑ) est réglée de manière à être identique à la période de commutation maître (Tₘₐₛₜₑᵣ).

3. Procédé de commande selon la revendication 1 ou 2, dans lequel, si la différence de temps souhaitée (Δt*) diffère de la différence de temps réelle (Δt), la période de commutation esclave (Tₛₗₐᵥₑ) est réglée de manière à être différente de la période de commutation maître (Tₘₐₛₜₑᵣ).

4. Procédé de commande selon la revendication 3, dans lequel, si la différence de temps souhaitée (Δt*) est supérieure à la différence de temps réelle (Δt), la période de commutation esclave (Tₛₗₐᵥₑ) est réglée de manière à être supérieure à la période de commutation maître (Tₘₐₛₜₑᵣ) et, si la différence de temps souhaitée (Δt*) est inférieure à la différence de temps réelle (Δt), la période de commutation esclave (Tₛₗₐᵥₑ) est réglée de manière à être inférieure à la période de commutation maître (Tₘₐₛₜₑᵣ).

5. Procédé de commande selon l'une des revendications 1 à 4, dans lequel :
si une différence (ε) entre la différence de temps souhaitée (Δt*) et la différence de temps réelle (Δt) est inférieure à un seuil inférieur (Δt_{UP}), la période de commutation esclave (Tₛₗₐᵥₑ) est réglée de manière à être inférieure à la période de commutation maître (Tₘₐₛₜₑᵣ) ;
si la différence (ε) entre la différence de temps souhaitée (Δt*) et la différence de temps réelle (Δt) est supérieure à un seuil supérieur (Δt_{LOW}), la période de commutation esclave (Tₛₗₐᵥₑ) est réglée de manière à être supérieure à la période de commutation maître (Tₘₐₛₜₑᵣ) ; et
si la différence (ε) entre la différence de temps souhaitée (Δt*) et la différence de temps réelle (Δt) est comprise entre le seuil inférieur (Δt_{UP}) et le seuil supérieur (Δt_{LOW}), la période de commutation esclave (Tₛₗₐᵥₑ) est réglée de manière à être identique à la période de commutation maître (Tₘₐₛₜₑᵣ).

6. Procédé de commande selon la revendication 5, dans lequel le seuil inférieur (Δt_{UP}) est négatif et le seuil supérieur (Δt_{LOW}) est positif.

7. Procédé de commande selon la revendication 5 ou 6, comprenant en outre l'étape consistant à déterminer le seuil inférieur (Δt_{UP}) et le seuil supérieur (Δt_{LOW}) sur la base de la période de commutation maître (Tₘₐₛₜₑᵣ).

8. Procédé de commande selon la revendication 5, 6 ou 7, dans lequel :
si une différence (ε) entre la différence de temps souhaitée (Δt*) et la différence de temps réelle (Δt) est inférieure au seuil inférieur (Δt_{UP}), la période de commutation esclave (Tₛₗₐᵥₑ) est réglée comme étant égale à une valeur minimale (TS_{MIN}) inférieure à la période de commutation maître (Tₘₐₛₜₑᵣ) ; et
si la différence (ε) entre la différence de temps souhaitée (Δt*) et la différence de temps réelle (Δt) est supérieure au seuil supérieur (Δt_{LOW}), la période de commutation esclave (Tₛₗₐᵥₑ) est réglée comme étant égale à une valeur maximale (TS_{MAX}) supérieure à la période de commutation maître (Tₘₐₛₜₑᵣ).

9. Procédé de commande selon la revendication 8 et comprenant en outre l'étape consistant à déterminer la valeur minimale (TS_{MIN}) et la valeur maximale (TS_{MAX}) sur la base de la période de commutation maître (Tₘₐₛₜₑᵣ).

10. Procédé de commande selon la revendication 9, dans lequel la valeur minimale (TS_{MIN}) et la valeur maximale (TS_{MAX}) sont déterminées en supposant qu'une différence de fréquence de commutation (ΔF) est appliquée à la période de commutation maître (Tₘₐₛₜₑᵣ).

11. Procédé de commande selon la revendication 10, dans lequel la valeur minimale (TS_{MIN}) et la valeur maximale (TS_{MAX}) sont calculées à l'aide des équations suivantes : ${TS}_{MIN} = 1 / \left(1/{T}_{master}+ΔF\right)$ ${TS}_{MAX} = 1 / \left(1/{T}_{master}-ΔF\right)$
TS_{MIN} valeur minimale ;
TS_{MAX} valeur maximale ;
Tₘₐₛₜₑᵣ période de commutation maître ;
ΔF différence de fréquence de commutation.

12. Procédé de commande selon l'une des revendications de 1 à 10 et comprenant les étapes suivantes :
la génération d'un signal de synchronisation (SYNCH) correspondant exactement à la période de commutation du premier convertisseur de puissance électronique (9) ; et
la détermination de la différence de temps réelle (Δt) en utilisant le signal de synchronisation (SYNCH) comme référence.

13. Procédé de commande selon l'une des revendications 1 à 12 et comprenant l'étape supplémentaire consistant à déterminer la différence de temps souhaitée (Δt*) sur la base de la période de commutation maître (Tₘₐₛₜₑᵣ).

14. Procédé de commande selon la revendication 13, dans lequel la différence de temps souhaitée (Δt*) correspond approximativement à un quart de la période de commutation maître (Tₘₐₛₜₑᵣ).

15. Procédé de commande selon l'une des revendications 1 à 14, dans lequel la période de commutation maître (Tₘₐₛₜₑᵣ) est déterminée uniquement sur la base de la vitesse de rotation de la machine électrique (4) correspondante.

16. Procédé de commande selon l'une des revendications 1 à 15, dans lequel la comparaison entre la différence de temps souhaitée (Δt*) et la différence de temps réelle (Δt), ainsi que la modification consécutive, si nécessaire, de la période de commutation esclave (Tₛₗₐᵥₑ), sont effectuées à chaque cycle de commutation des convertisseurs de puissance électroniques (9).

17. Procédé de commande selon l'une des revendications 1 à 16 et comprenant l'étape supplémentaire consistant à interrompre temporairement la modification de la période de commutation esclave (Tₛₗₐᵥₑ) sur la base de la comparaison entre la différence de temps souhaitée (Δt*) et la différence de temps réelle (Δt), lorsqu'une valeur absolue d'une différence entre les vitesses de rotation des deux machines électriques (4) dépasse un seuil de synchronisation.
